# EUROPÄISCHE PATENTANMELDUNG

(11) **EP 1 109 109 A1**
(43) Veröffentlichungstag der Anmeldung: **20.06.2001**
(21) Anmeldenummer: 99124958.2
(22) Anmeldetag: 14.12.1999
(51) Int. Cl.: G06F 17/24, G06F 17/30

(54) **System zum Erzeugen und Verwalten von beschrifteten Schildern und Etiketten**

(71) Anmelder: HEWI HEINRICH WILKE GMBH, 34454 Bad Arolsen (DE)
(72) Erfinder: Kaupe, Jürgen, 34516 Vöhl-Marienhagen (DE)
(74) Vertreter: Manitz, Finsterwald & Partner

(57) **Zusammenfassung**

Es wird ein System zum Erzeugen und Verwalten von beschrifteten Schildern, Etiketten oder dergleichen mit einer zentralen Datenbank beschrieben. In der zentralen Datenbank sind für jedes Schild sowohl alle für den Inhalt der Beschriftung als auch alle für den optischen Aufbau der Beschriftung erforderlichen Daten in einem Datensatz abgespeichert. Das System umfaßt weiterhin eine Vielzahl von dezentralen Datenbanken, in denen jeweils ein Teil der in der zentralen Datenbank gespeicherten Datensätze, zumindest ursprünglich enthalten und in die Datensätze aus den dezentralen Datenbanken in die zentrale Datenbank übernehmbar sind. Weiterhin ist eine Eingabeeinheit vorgesehen, über die die in der zentralen Datenbank abgespeicherten Datensätze veränderbar sind, sowie eine Ausgabeeinheit, über die für jeden Datensatz der zentralen Datenbank ein Schild gemäß den in diesem Datensatz enthaltenden inhaltlichen und optischen Informationen beschriftbar ist.

## Beschreibung

Die vorliegende Erfindung betrifft ein System zum Erzeugen und Verwalten von beschrifteten Schildern, Etiketten oder dergleichen. Dabei kann es sich beispielsweise um Türschilder, Wegweiser- oder Hinweisschilder oder um sonstige insbesondere bei Behörden- oder Firmengroßprojekten erforderliche Schilder handeln.

Während solche Schilder grundsätzlich aus jedem beliebigen Material, wie beispielsweise Kunststoff, Metall, Pappe, Holz oder dergleichen ausgebildet sein können, sind mit dem erfindungsgemäßen System bevorzugt Einlegeschilder aus Papier oder Folie erzeugbar und verwaltbar, die beispielsweise in Blech- oder Kunststoffträgerelemente mit Acrylglasfrontscheibe eingesetzt werden können. Dadurch wird eine besonders hohe Variabilität des erfindungsgemäßen Systems erreicht.

Die heute übliche Vorgehensweise besteht bei der Projektierung eines Neubaus oder Umbaus im Rahmen einer Behörden- oder Firmengründung bzw. -verlegung darin, daß im Rahmen der Ausschreibung auch die Beschilderung des oder der Gebäude enthalten ist. Eine gute und strukturierte Beschilderung ist eine wesentliche Voraussetzung dafür, daß insbesondere in komplexen Gebäuden und Gebäudeanordnungen bestimmte Personen oder Räume schnell und möglichst direkt erreicht werden können.

Die auf die Schilder aufzudruckenden Daten werden üblicherweise manuell erfaßt bzw. festgelegt und in einem sogenannten Pflichtenheft niedergeschrieben. Anhand der niedergeschriebenen Daten werden dann die entsprechenden Beschilderungen hergestellt.

Problematisch dabei ist es, daß nach erfolgter Erstbeschilderung die Wartung und Pflege des gesamten Schildersystems üblicherweise in den Händen der die Gebäude nutzenden Behörde bzw. Firma liegt. Hier besteht das Problem, daß die Einrichtung einer Verwaltung für die Beschilderung üblicherweise nicht sinnvoll ist, da sich in Zeiten, in denen sich keine oder nur wenige Beschriftungen ändern, dieser Aufwand nicht lohnen würde. Sind jedoch eine Vielzahl von Änderungen an den Beschriftungen notwendig, so sind die üblicherweise mit anderen Aufgaben betreuten Benutzer plötzlich dazu aufgefordert, sich auch um die Beschilderungen zu kümmern, was dazu führt, daß dies entweder ständig "auf die lange Bank geschoben wird" oder daß unbefriedigende Schnellösungen, beispielsweise mit handschriftlichen Durchstreichungen, überhand nehmen. Eine saubere und insbesondere optisch nach den ursprünglichen Vorgaben durchgängig geführte Beschilderung ist bei einer solchen Eigenverwaltung in den seltensten Fällen zu erreichen.

Es ist eine Aufgabe der Erfindung, ein System der eingangs genannten Art anzugeben, mit dem eine einfache Erzeugung und Verwaltung von beschrifteten Schildern und dergleichen mit wirtschaftlich minimalem Aufwand unter gleichzeitiger Einhaltung von durchgängig vorgegebenen optischen Kriterien möglich ist.

Erfindungsgemäß umfaßt ein solches System eine zentrale Datenbank, in der für jedes Schild sowohl alle für den Inhalt der Beschriftung als auch alle für den optischen Aufbau der Beschriftung erforderlichen Daten in einem Datensatz abgespeichert sind, eine Vielzahl von dezentralen Datenbanken, in denen jeweils ein Teil der in der zentralen Datenbank gespeicherten Datensätze zumindest ursprünglich enthalten und die Datensätze aus den dezentralen Datenbanken in die zentrale Datenbank übernehmbar sind, eine Eingabeeinheit, über die die in der zentralen Datenbank abgespeicherten Datensätze veränderbar sind, und eine Ausgabeeinheit, über die für jeden Datensatz der zentralen Datenbank ein Schild gemäß den in diesem Datensatz enthaltenden inhaltlichen und optischen Information beschriftbar ist.

Durch die Erfassung jedes einzelnen Schildes sowohl mit seinen für den Inhalt der Beschriftung erforderlichen Daten als auch allen für den optischen Aufbau der Beschriftung erforderlichen Daten in einem Datensatz einer zentralen Datenbank ist gewährleistet, daß zu jedem Zeitpunkt eine erforderlichen Änderung an einem Schild durch eine einfache entsprechende Änderung des das Schild repräsentierenden Datensatzes innerhalb der zentralen Datenbank realisiert werden kann. Weitere, den wirtschaftlichen Aufwand erhöhende Maßnahmen sind hierzu nicht erforderlich. Dabei kann die zentrale Datenbank unmittelbar bei dem Benutzer vorgesehen und von diesem verwaltet werden, im Zuge der vereinfachten Verwaltung ist es jedoch erfindungsgemäß insbesondere vorteilhaft wenn die zentrale Datenbank bei einer externen Verwaltungsstelle, beispielsweise bei einer Firma, die auf das Drucken von Schildern, Etiketten und dergleichen spezialisiert ist, vorhanden ist und von dieser gepflegt wird.

Über die Vielzahl von dezentralen Datenbanken ist eine einfach Erfassung, insbesondere im Zuge einer Erstaufnahme, der erforderlichen Daten möglich. Durch die Übernahme der in den dezentralen Datenbanken gespeicherten Daten in die zentrale Datenbank sind Fehlübertragungen, wie sie bei manueller Erfassung üblich sind, ausgeschlossen. Weiterhin können auf diese Weise, zusätzlich zu der Änderung direkt in der zentralen Datenbank über die Eingabeeinheit, Änderungen, die beispielsweise von einem Außendienstmitarbeiter in einer dezentralen Datenbank erfaßt wurden, komplett automatisch in die zentrale Datenbank übernommen werden.

Neu aufgenommene sowie geänderte Schilder können dann über die Ausgabeeinheit entweder unmittelbar durch den Benutzer gedruckt werden oder es kann ein entsprechender Druckbefehl an die Verwaltungsstelle abgegeben werden, wodurch das Drucken und insbesondere das Zusenden eines entsprechend neu gedruckten Schildes veranlaßt wird.

Nach einer vorteilhaften Ausführungsform der Erfindung ist die Eingabeeinheit über ein Datenfernübertragungsnetz, insbesondere das Internet, mit der dezentralen Datenbank verbunden. Im Falle einer Änderung kann der Benutzer diese Änderung somit online, bevorzugt über einen Internet-Zugang, unmittelbar in der zentralen Datenbank durchführen. Anschlie-βend kann er wahlweise entweder einen Druckauftrag online hinzufügen oder es ist auch möglich, daß nach jeder Änderung automatisch ein neues Türschild ausgedruckt wird. Im günstigsten Falle wird dieses geänderte Türschild noch am gleichen Tag an den Benutzer versandt, so daß ihm das geänderte Türschild bereits am nächsten Tag mit der Post zugestellt werden kann. Das alte, beispielsweise in ein Trägerelement eingesteckte Einlegeschild kann durch das geänderte Schild einfach ersetzt werden, das hinsichtlich seiner ungeänderten Daten identisch mit dem alten Schild ist und darüber hinaus sich nahtlos in optimaler Weise in die verwendete Schilderhierarchie und -struktur einfügt.

Nach einer weiteren bevorzugten Ausführungsform der Erfindung ist die Änderung der in der zentralen Datenbank abgespeicherten Datensätze über die Eingabeeinheit nur nach einer speziellen Authentifizierung, insbesondere einer Eingabe eines Kennwortes möglich.

Dabei kann die Authentifizierung selbstverständlich nur für einen Teil der Datensätze der zentralen Datenbank gültig sein, da, abhängig vom jeweiligen Benutzer, ein unterschiedlicher Umfang der in der zentralen Datenbank abgespeicherten Datensätze änderbar sein kann. Auf diese Weise wird vermieden, daß eine unberechtigte Änderung innerhalb der zentralen Datenbank möglich ist.

Nach einer weiteren vorteilhaften Ausführungsform der Erfindung ist nach Änderung eines Datensatzes der zentralen Datenbank über die Eingabeeinheit eine Änderung zumindest dieses Datensatzes durch Übernahme aus einer dezentralen Datenbank gesperrt. Dadurch wird vermieden, daß nach einer direkten Online-Änderung innerhalb der zentralen Datenbank dieser geänderte Datensatz mit einem nicht aktualisierten, dem gleichen Schild entsprechenden alten Datensatz aus einer dezentralen Datenbank überschrieben wird. Hierbei ist es selbstverständlich möglich, daß nach Aktualisierung der dezentralen Datenbank, beispielsweise durch Übernahme bestimmter Datensätze aus der zentralen Datenbank in die dezentrale Datenbank, eine entsprechende spätere Übernahme wiederum geänderter Datensätze der dezentralen Datenbank in die zentrale Datenbank wieder freigegeben ist. Weiterhin kann die Sperrung der Übernahme geänderter Daten nicht auf Datensatzebene, sondern auf Feldebene stattfinden, so daß in diesem Fall alle Felder, die nicht online direkt in der zentralen Datenbank geändert wurden, aus der dezentralen Datenbank in die zentrale Datenbank in die zentrale Datenbank übernommen werden können. Lediglich entsprechend online geänderte Felder innerhalb der zentralen Datenbank sind für eine entsprechende Übernahme aus der dezentralen Datenbank gesperrt, wobei vorteilhaft während der Übernahme durch eine Warnung oder beispielsweise in einer Log-Datei auf diese Sperrung hingewiesen wird.

Nach einer weiteren vorteilhaften Ausführungsform der Erfindung sind die Datensätze der dezentralen Datenbanken über ein geführtes Leitsystem eingebbar. Durch das geführte Leitsystem wird es dem Benutzer ohne weitere Vorkenntnisse ermöglicht, alle für den reibungslosen Ablauf des erfindungsgemäßen Systems notwendigen Daten vollständig und in eindeutiger Form in die jeweilige dezentrale Datenbank einzugeben.

Bevorzugt werden daher durch das geführte Leitsystem zu jedem Zeitpunkt die jeweils gerade zulässigen Eingabemöglichkeiten, insbesondere abhängig von vorangegangenen Eingaben, unmittelbar aufgezeigt. So ist beispielsweise abhängig von dem Eingabedatum "Raumtyp" in machen Fällen eine nachfolgende Eingabe eines Namens (z.B. bei Raumtyp gleich Büro) möglich, während bei anderen Raumtypen (z.B. WC, Aufzug, usw.) eine solche Eingabe eines Namens nicht möglich ist.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher erläutert; in diesen zeigen:
- Fig. 1: ein erfindungsgemäßes System zum Erzeugen und Verwalt von beschrifteten Schildern, Etiketten oder dergleichen,
- Fig. 2: einen ersten Teil eines sich über zwei Seiten erstreckenden Flußdiagramms zur Darstellung eines bei einem erfindungsgemäßen System nach Fig. 1 verwendbaren, geführten Leitsystems und
- Fig. 3: den zweiten Teil des Flußdiagramms aus Fig. 2.

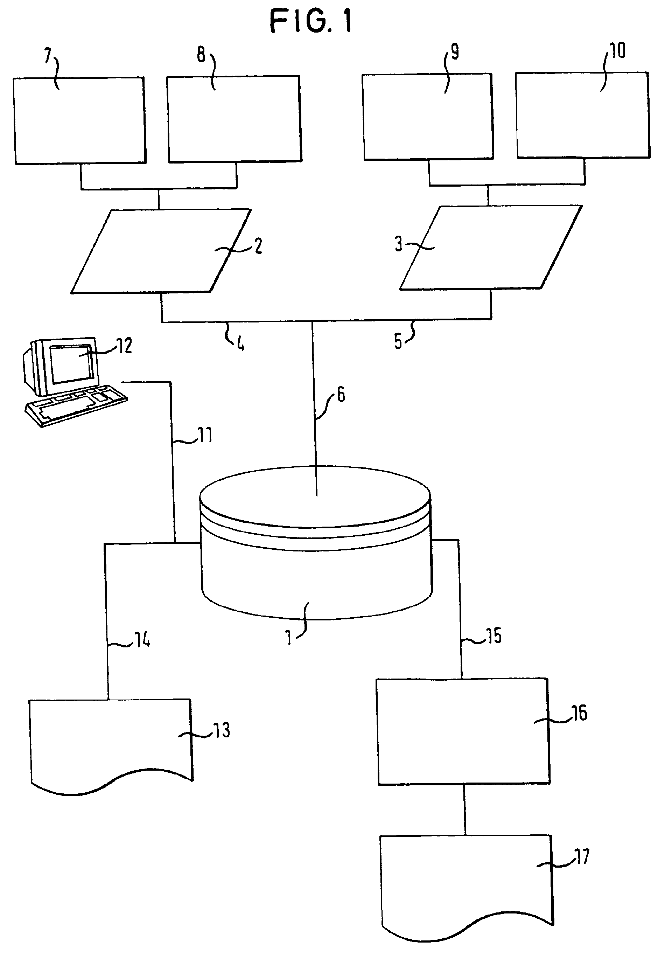

Fig. 1 zeigt eine zentrale Datenbank 1, in der eine Vielzahl von Datensätze abgespeichert sind, die jeweils ein beschriftetes Schild, Etikett oder dergleichen repräsentieren. Dabei enthalten die Datensätze sowohl alle für den Inhalt der Beschriftung, also Text, Graphiken und dergleichen, als auch alle für den optischen Aufbau der Beschriftung erforderlichen Daten, worunter beispielsweise Schriftarten, Schriftgrößen, Schriftstile, Schriftfarben, Hintergrundfarben, Schriftanordnungen und/oder Layout des Schildes, usw. fallen.

Mit der zentralen Datenbank 1 sind zwei dezentrale Datenbanken 2, 3 verbunden, wobei durch die Verbindungslinien 4, 5 sowie die zusammengefaßte Verbindungslinie 6 angedeutet ist, daß die in den dezentralen Datenbanken 2, 3 enthaltenen Datensätze wahlweise in ihre Gesamtheit oder selektiv in die zentrale Datenbank 1 übernommen werden können.

Während die dezentralen Datenbanken 2, 3 beispielsweise als EXCEL-Dateien aufgebaut sein können, kann die zentrale Datenbank 1 beispielsweise als ACCESS-Datenbank aufgebaut sein. Es ist jedoch auch die Verwendung sonstiger, die jeweiligen Anforderungen erfüllender Datenbanken möglich.

Die dezentrale Datenbank 2 kann sich beispielsweise auf einem mobilen Computer eines Außendienstmitarbeiters einer die Schilderdaten verwaltenden Firma befinden, wo sie über ein Datenerfassungs- und Änderungsprogramm, beispielsweise über EXCEL, erstellt, und/oder bearbeitet werden kann. Das Erfassen bzw. Ändern entsprechender Schilddaten ist in Fig. 1 symbolisch durch einen Datenerfassungsblock 7 und einen Datenänderungsblock 8 dargestellt.

Der Außendienstmitarbeiter kann sich mit seinem mobilen Computer zu den jeweiligen Kunden begeben und dort die gewünschten Daten unmittelbar in die dezentrale Datenbank 2 eingeben.

Grundsätzlich ist es auch möglich, daß die dezentrale Datenbank 2 nicht auf einem mobilen Computer, sondern auf einem nicht mobilen Computer installiert ist. In diesem Fall können die Daten wiederum durch den Außendienstmitarbeiter oder auch durch den Kunden selbst über den Datenerfassungsblock 7 bzw. den Datenänderungsblock 8 in die dezentrale Datenbank 2 aufgenommen bzw. in dieser geändert werden.

Eine Übertragung der Datensätze aus der dezentralen Datenbank 2 in die zentrale Datenbank 1 über die Verbindungslinien 4, 6 kann je nach verwendetem System durch einen austauschbaren Datenträger, beispielsweise eine Diskette, eine Datenübertragungsleitung, beispielsweise Telefon, ISDN, Netzwerkleitung oder dergleichen, oder über Funk, beispielsweise über ein mobiles Telefon, erfolgen. Auch die Daten der dezentralen Datenbank 3 sind über einen Datenerfassungsblock 9 bzw. einen Datenänderungsblock 10 in die dezentrale Datenbank 3 eingebbar bzw. in dieser änderbar. Dies kann in der gleichen oder in einer ähnlichen Weise wie zu der dezentralen Datenbank 2 geschildert erfolgen.

Die unterschiedlichen dezentralen Datenbänke 2, 3 können beispielsweise dadurch bedingt sein, daß die Daten von unterschiedlichen Außendienstmitarbeitern und/oder Kunden gleichzeitig erfaßt werden, es können jedoch auch abhängig vom Schildertyp unterschiedliche dezentrale Datenbanken 2, 3 angelegt werden. So können in der dezentralen Datenbank 2 beispielsweise die Daten von Türschildern und in der dezentralen Datenbank 3 die Daten von Wegweiser- und Hinweisschildern enthalten sein. Der Grundaufbau der dezentralen Datenbank 2, 3 ist jedoch im wesentlichen immer gleich.

Gemäß Fig. list die zentrale Datenbank 1 über eine Datenübertragungsleitung 11 mit einer als Computer ausgebildeten Eingabeeinheit 12 verbunden. Die Datenübertragungsleitung 11 kann dabei eine Datenfernübertragungsleitung, beispielsweise eine Internetverbindung, eine direkte Telefonleitung, eine Funkleitung, beispielsweise über ein mobiles Telefon, oder eine sonstige geeignete Datenübertragungsleitung 11 sein, mit der eine Online-Verbindung zwischen der Eingabeeinheit 12 und der zentralen Datenbank 1 möglich ist. Bei Ankopplung über eine Internetverbindung ist somit der die zentrale Datenbank 1 enthaltende Rechner als Web-Server konfiguriert oder über einen solchen zugreifbar.

Über die Eingabeeinheit 12 kann ein Kunde oder auch ein Außendienstmitarbeiter Datensätze in der zentralen Datenbank 1 direkt ändern bzw. hinzufügen. Der Zugriff auf die zentrale Datenbank 1 ist dabei üblicherweise durch eine spezielle Authentifizierung abgesichert, so daß nur zum einen generell berechtigte Benutzer und zum anderen diese nur auf für sie freigegebene Datensätze zugreifen können. Die Authentifizierung kann dabei durch Eingabe eines Kennwortes in Verbindung beispielsweise mit einer Benutzerkennung aber auch durch sonstige geeignete Maßnahmen, wie beispielsweise hardware-unterstützte Authentifizierungsverfahren, beispielsweise mittels eines Chips auf einer Kennkarte, erfolgen.

Wurde ein in der zentralen Datenbank 1 gespeicherter Datensatz über die Eingabeeinheit 12 verändert, so kann er nicht mehr durch Übernahme aus einer der dezentralen Datenbank 2, 3 in die zentrale Datenbank 1 überschrieben werden. Auf diese Weise wird verhindert, daß beispielsweise direkt vom Kunden über die Eingabeeinheit 12 eingegebene, neuere Änderungen beim nächsten Überspielen der dezentralen Datenbank 2, 3 in die zentrale Datenbank 1 durch veraltete Daten überschrieben werden. Werden beispielsweise die dezentralen Datenbanken 2, 3 wieder rückwärts aus der zentralen Datenbank 1 aktualisiert, so kann die Sperre der bis zu diesem Zeitpunkt über die Eingabeeinheit 12 online geänderten Datensätze wieder rückgängig gemacht werden.

Selbstverständlich ist es bei dem erfindungsgemäßen System auch möglich, daß ein Kunde Änderungswünsche auf schriftlichem Wege, beispielsweise durch Brief oder Fax, oder auch durch e-mail an die Verwaltung der zentralen Datenbank 1 mitteilt. Entsprechende Änderungswünschen werden direkt von der Verwaltung der zentralen Datenbank 1 über eine weitere Eingabeeinheit 13, nachdem sie manuell oder automatisch erfaßt worden sind, in die zentrale Datenbank 1 übernommen. Die weitere Eingabeeinheit 13 ist dabei bevorzugt ebenfalls als Computer ausgebildet, wobei es sich wahlweise um den Computer, auf dem die zentrale Datenbank 1 unmittelbar gespeichert ist, oder um eine mit diesem Computer beispielsweise über eine Netzverbindung verbundenen Computer handelt. Grundsätzlich ist es jedoch sinnvoll, daß die weitere Eingabe 13 über eine lokale Verbindung 14 mit der zentralen Datenbank 1 verbunden ist.

Die in der zentralen Datenbank 1 abgespeicherten Datensätze können über eine Ausgabeleitung 15 ausgelesen und entsprechend den in den Datensätzen enthaltenen, den optischen Aufbau sowie den Inhalt der Beschriftung repräsentierenden Daten auf einer mit der Ausgabeleitung 15 verbundenen Ausgabeeinheit 16 ausgedruckt werden, so daß als Endprodukt die beschrifteten Schilder 17 entstehen.

Die Ausgabeeinheit 16 kann dabei beispielsweise ein lokaler oder ein Netzwerkdrucker sein, der als Laser- oder Tintenstrahldrucker oder als sonstiges geeignetes Druckmedium ausgebildet sein kann.

Das Ausdrucken der beschrifteten Schilder 17 kann dabei durch den Kunden über die Eingabeeinheit 12 ausgelöst werden, wobei dies sowohl für geänderte als auch für unveränderte Datensätze erfolgen kann. Es ist auch möglich, daß der Kunde über die Eingabeeinheit 12 lediglich einen Druckwunsch absetzt, der letztlich von der Verwaltung der zentralen Datenbank 1 ausgeführt wird.

Grundsätzlich ist es auch denkbar, daß jeder abgeschlossener Änderungsvorgang, der über die Eingabeeinheit 12 oder 13 ausgeführt wurde, automatisch einen entsprechenden Druckvorgang anstößt. Gleiches ist auch für die bei einer Übernahme aus den dezentralen Datenbanken 2, 3 in die zentrale Datenbank 1 geänderten bzw. neu aufgenommenen Datensätze denkbar.

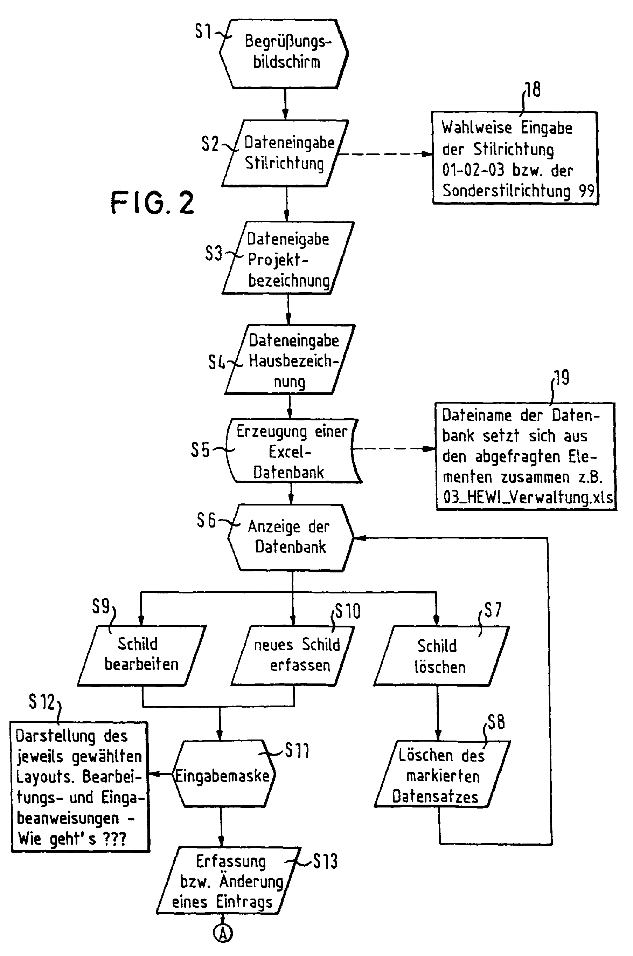

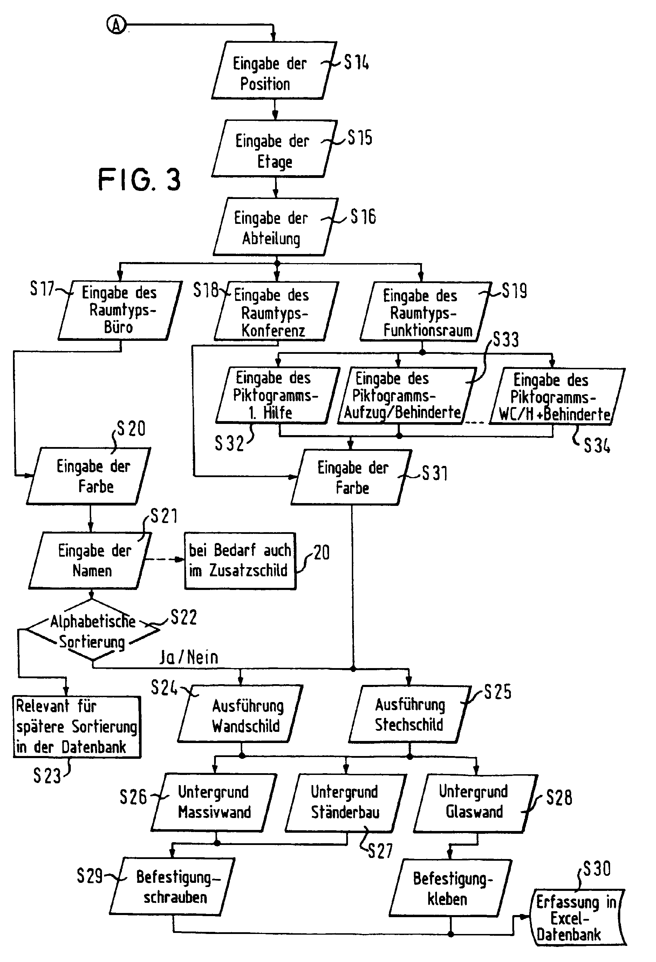

In den Fig. 2 und 3 wird anhand eines beispielhaften Flußdiagramms eine mögliche Realisierung der Datenerfassungs- bzw. Änderungsblöcke 7, 8, 9, 10 dargestellt. Dabei stellt die Fig. 3 die Weiterführung der Fig. 2 dar.

Nach der Anzeige eines Begrüßungsbildschirms in einem Schritt S 1 wird eine Eingabemaske dargestellt, in der die Stilrichtung des zu erzeugenden Schildes aus einer Menge von möglichen Stilrichtungen ausgewählt werden kann. Dies ist durch den Schritt S2 angedeutet. Die in dem Block 18 angezeigten Stilrichtungsarten 01, 02, 03, 99 werden dabei bevorzugt durch aussagekräftige Stilnamen in der Eingabemaske dargestellt.

In einem nächsten Schritt S3 erfolgt die Eingabe einer Projektbezeichnung, die im allgemeinen frei wählbar ist, während sich daran in einem Schritt S4 die Eingabe einer Hausbezeichnung anschließt, die, je nach Bedarf, frei eingebbar ist oder aus einer vorgegebenen Liste ausgewählt werden kann.

Mit den bisher eingegebenen Daten wird in einem Schritt S5 eine EXCEL-Datenbank erzeugt, wobei sich gemäß dem Block 19 der Dateiname der Datenbank aus den abgefragten Elementen zusammensetzt. Bei Eingabe der Stilrichtung "03", der Projektbezeichnung "HEWI" und der Hausbezeichnung "Verwaltung" ergibt sich somit beispielsweise der Name der EXCEL-Datenbank mit 03_HEWI_Verwaltung.xls.

Durch diese automatische Generierung des Namens der dezentralen Datenbanken 2, 3 ist im Falle einer Änderung eines Datensatzes nach Eingabe der Grunddaten in den Schritten S2, S3 und S4 die automatische Auswahl der gewünschten dezentralen Datenbank 2, 3 möglich.

In einem weiteren Schritt S6 erfolgt die Anzeige der in der ausgewählten dezentralen Datenbank 2, 3 enthaltenden Datensätze bevorzugt in einem Browse-Fenster bzw. einem EXCEL-Arbeitsblatt.

Soll ein Schild aus der dezentralen Datenbank 2, 3 gelöscht werden, so kann er in einem entsprechenden Schritt S7 dieser Punkt angewählt und nach Markieren des Datensatzes in einem Schritt S8 der ausgewählte Datensatz gelöscht werden.

Anschließend wird wieder die restliche Datenbank im Schritt S6 dargestellt.

Soll ein vorhandener Datensatz, d.h. ein Schild bearbeitet werden, so wird ein Schritt S9 ausgewählt, während bei dem Erfassung neuer Schilddaten ein Schritt S10 ausgewählt wird.

In beiden Fällen kommt man dann anschließend in einem Schritt S11 in eine Eingabemaske, über die zum einen in einem Schritt S12 das jeweils gewählte Layout des gewählten Schildes dargestellt sowie Bearbeitungsund Eingabeanweisungen abgerufen werden können, und zum anderen in einen Erfassungs- bzw. Änderungsmodus S13 eines Eintrages übergegangen werden kann.

In drei sich darin anschließenden Schritten S14, S15, und S16 werden anschließend die Position, die Etage und die Abteilung, die auf das jeweilige Schild aufgedruckt werden sollen, abgefragt bzw. entsprechende Änderungen dieser vorhanden Daten festgestellt.

Nach diesen für alle Schilder gleichen Daten können in drei weiteren Schritten S17, S18, S19 der gewünschte Raumtyp als "Büro", "Konferenz" oder "Funktionsraum" angegeben werden.

Wird als Raumtyp im Schritt S17 "Büro" angegeben, so ist in einem Schritt S20 die Farbe des Schildes auswählbar und in einem sich daran anschließenden Schritt S21 der auf das Schild aufzudruckende Name einzugeben. Dabei kann gemäß dem Block 20 bei Bedarf auch in einem Zusatzschild ein Name angegeben werden.

Ist eine alphabetische Sortierung nach Namen gewünscht, so kann dies in einem Schritt S22 angegeben werden, woraufhin ein entsprechendes Flag in einem Schritt S23 gespeichert wird.

Der Eingabeablauf verläuft unabhängig von der Auswahl dem Schritt S22 anschließend weiter zu den Schritten S24 oder S25, je nachdem, ob als Ausführung des Schildes "Wandschild" oder "Stechschild" gewählt wird. In den daran sich anschließenden Eingabeschritten S26, S27, S28 können unterschiedliche Untergründe (Masivwand, Ständerbau oder Glaswand) ausgewählt werden, wobei bei entsprechender Auswahl gemäß den Schritten S26 und S27 in einem abschließenden Schritt S29 als Befestigungsmittel Schrauben und bei der Auswahl gemäß dem Schritt S28 als Befestigung Kleben gewählt und in die dezentrale Datenbank 2, 3 eingetragen wird.

Im abschließenden Schritt S30 werden die gesammelten Daten für das gewünschte Schild in der dezentralen Datenbank 2, 3 abgespeichert.

Wurde im Schritt S18 als Raumtyp "Konferenz" gewählt, so ist in einem Schritt S31 lediglich die Eingabe der Schildfarbe vorzunehmen, woraufhin sich die weitere Eingabe in den Schritten S24 und S25 wie bereits dargelegt fortgesetzt.

Ähnliches gilt bei der Auswahl des Raumtyps "Funktionsraum" im Schritt S19 wo sich zunächst lediglich noch die Eingabe eines passenden Piktogramms in den Schritten S32 (Erste Hilfe) S33 (Aufzug/Behinderte) und S34 (WC/H + Behinderte) sowie sonstiger geeigneter Piktogramme anschließt.

Nach dieser Piktogrammauswahl schließen sich wiederum im Schritt S31 1 die Eingabe der Farbe und daran sich die bereits beschriebenen weiteren Eingabeschritte an.

Durch dieses geführte Leitsystem wird sowohl die Datenerfassung für ein neues Schild als auch für Änderungen eines bestehenden Schildes sehr vereinfacht, so daß Eingabefehler praktisch ausgeschlossen sind. Alle erforderlichen Daten liegen nach dem Schritt S30 in einer dezentralen Datenbank 2, 3 vor, deren Datenstruktur so aufgebaut ist, daß die Daten automatisch in die zentrale Datenbank 1 übernommen werden können.

Dieses geführte Leitsystem kann selbstverständlich in erforderlicher Weise abgewandelt werden und es ist vorteilhaft, wenn das geführte Leitsystem nicht nur beim Erzeugen und Änderung der dezentralen Datenbank 2, 3, sondern zumindest grundsätzlich auch bei der direkten Online-Änderung der Daten über die Eingabeeinheit 12 direkt in der zentralen Datenbank 1 vorgesehen ist. Auf diese Weise können auch bei dieser direkten Dateneingabe Fehler durch Benutzer weitgehend ausgeschlossen werden.

### Bezugszeichenliste

- 1: zentrale Datenbank
- 2: dezentrale Datenbank
- 3: dezentrale Datenbank
- 4: Verbindungslinie
- 5: Verbindungslinie
- 6: Verbindungslinie
- 7: Datenerfassungsblock
- 8: Datenänderungsblock
- 9: Datenerfassungsblock
- 10: Datenänderungsblock
- 11: Datenübertragungsleitung
- 12: Eingabeeinheit
- 13: weitere Eingabeeinheit
- 14: lokale Verbindung
- 15: Ausgabeleitung
- 16: Ausgabeeinheit
- 17: beschriftetes Schild
- 18: Block
- 19: Block
- 20: Block

## Patentansprüche

1. System zum Erzeugen und Verwalten von beschrifteten Schildern (17), Etiketten oder dergleichen mit einer zentralen Datenbank (1), in der für jedes Schild (17) sowohl alle für den Inhalt der Beschriftung als auch alle für den optischen Aufbau der Beschriftung erforderlichen Daten in einem Datensatz abgespeichert sind, mit einer Vielzahl von dezentralen Datenbanken (2, 3), in denen jeweils ein Teil der in der zentralen Datenbank (1) gespeicherten Datensätze zumindest ursprünglich enthalten und die Datensätze aus den dezentralen Datenbanken (2, 3) in die zentrale Datenbank (1) übernehmbar sind, mit einer Eingabeeinheit (12), über die die in der zentralen Datenbank (1) abgespeicherten Datensätze veränderbar sind, und mit einer Ausgabeeinheit (16), über die für jeden Datensatz der zentralen Datenbank (1) ein Schild (17) gemäß den in diesem Datensatz enthaltenen inhaltlichen und optischen Informationen beschriftbar ist.

2. System nach Anspruch 1,
**dadurch gekennzeichnet,**
daß die Eingabeeinheit (12) über ein Datenfernübertragungsnetz (11), insbesondere das Internet, mit der dezentralen Datenbank (1) verbunden ist.

3. System nach Anspruch 1 oder 2,
**dadurch gekennzeichnet,**
daß die Änderung der in der zentralen Datenbank (1) abgespeicherten Datensätze über die Eingabeeinheit (12) nur nach einer speziellen Authentifizierung, insbesondere einer Eingabe eines Kennwortes, möglich ist.

4. System nach Anspruch 3,
**dadurch gekennzeichnet,**
daß die Authentifizierung nur für einen Teil der Datensätze der zentralen Datenbank (1) gültig ist.

5. System nach einem der vorhergehenden Ansprüche,
**dadurch gekennzeichnet,**
daß nach Änderung eines Datensatzes der zentralen Datenbank (1) über die Eingabeeinheit (12) eine Änderung zumindest dieses Datensatzes durch Übernahme aus einer dezentralen Datenbank (2, 3) gesperrt ist.

6. System nach einem der vorhergehenden Ansprüche,
**dadurch gekennzeichnet,**
daß die Datensätze der dezentralen Datenbanken (2, 3) über ein geführtes Leitsystem eingebbar sind.

7. System nach Anspruch 6,
**dadurch gekennzeichnet,**
daß durch das geführte Leitsystem zu jedem Zeitpunkt die jeweils gerade zulässigen Eingabemöglichkeiten, insbesondere abhängig von vorangegangenen Eingaben, unmittelbar aufgezeigt werden.

8. System nach einem der vorhergehenden Ansprüche,
**dadurch gekennzeichnet,**
daß über die Eingabeeinheit (12) eine Beschriftung eines Schildes (17) auslösbar ist.
